# FASCICULE DE BREVET EUROPEEN

(11) **EP 3 042 222 B1**
(45) Date de publication et mention de la délivrance du brevet: **02.10.2019**
(21) Numéro de dépôt: 14759188.7
(22) Date de dépôt: 04.09.2014
(51) Int. Cl.: G01T 1/20, G01T 3/06

(54) **SYSTÈME ET PROCÉDÉ DE DÉTECTION DE RAYONNEMENTS NEUTRON, GAMMA ET MUON AVEC DES SCINTILLATEURS PLASTIQUES CONTIGUS**
VORRICHTUNG UND METHODE ZUR DETEKTION VON NEUTRONEN, GAMMA UND MUONEN MIT BENACHBARTEN PLASTIK-SZINTILLATOREN
SYSTEM AND METHOD OF DETECTION OF NEUTRONS, GAMMA AND MUONS WITH CONTIGUOUS PLASTIC SCINTILLATORS

(30) Priorité: 06.09.2013 FR 1358552
(43) Date de publication de la demande: 13.07.2016
(73) Titulaire: Commissariat à l'Énergie Atomique et aux Énergies Alternatives, 75015 Paris (FR)
(72) Inventeur: SANNIE, Guillaume, F-92130 Issy les Moulineaux (FR); CORRE, Gwenole, F-91190 Saint-Aubin (FR); KONDRASOVS, Vladimir, F-91120 Palaiseau (FR); NORMAND, Stéphane, F-50540 Isigny le Buat (FR)
(74) Mandataire: Brevalex
(86) Numéro de dépôt international: PCT/EP2014/068865
(87) Numéro de publication internationale: WO 2015/032872

(56) Documents cités:
- HANSEN R R ET AL: "NEUTRON-GAMMA DISCRIMINATION IN PLASTIC SCINTILLATORS", IEEE TRANSACTIONS ON NUCLEAR SCIENCE, IEEE SERVICE CENTER, NEW YORK, NY, US, vol. 47, no. 6, 1 décembre 2000 (2000-12-01), pages 2024-2028, XP001039261, ISSN: 0018-9499, DOI: 10.1109/23.903840
- PETER E VANIER ET AL: "Calibration and testing of a large-area fast-neutron directional detector", NUCLEAR SCIENCE SYMPOSIUM CONFERENCE RECORD, 2007. NSS '07. IEEE, IEEE, PI, 1 octobre 2007 (2007-10-01), pages 179-184, XP031205828, ISBN: 978-1-4244-0922-8
- DE VITA R ET AL: "A large surface neutron and photon detector for civil security applications", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, vol. 617, no. 1-3, 11 mai 2010 (2010-05-11), pages 219-222, XP027050543, ISSN: 0168-9002 [extrait le 2009-10-08]

## Description

### DOMAINE TECHNIQUE

Le domaine de l'invention est celui de la détection de la radioactivité, notamment pour détecter le passage éventuel d'une source radioactive à proximité d'un portique de sécurité.

L'installation de dispositifs pour la détection de la radioactivité s'applique par exemple aux accès véhicule et piéton des installations nucléaires et de nombreux lieux publics, tels que les ports pour les conteneurs maritimes, les aéroports, les gares, les douanes.

### ÉTAT DE LA TECHNIQUE ANTÉRIEURE

On cherche à réaliser des portiques de contrôle de radioactivité qui soient de grande sensibilité dans le but de détecter rapidement la radioactivité potentielle au passage de véhicules et de personnes en mouvement. Il s'avère en particulier nécessaire de discriminer les parties de rayonnement provenant des neutrons des parties provenant des gammas et des muons.

La mesure des neutrons était réalisée par le passé avec des détecteurs à base d'Hélium 3. Or depuis près de dix ans, les industriels qui développent des portiques de contrôle des personnes et des biens sont confrontés à la rareté de l'Hélium 3 et au coût croissant de ces détecteurs.

L'utilisation de scintillateurs plastique a été préconisée pour contourner cette difficulté. De tels scintillateurs plastiques présentent l'avantage de permettre de réaliser des détecteurs solides, simples à fabriquer, sans restrictions d'export, ne contenant pas de produits toxiques. Le faible coût des scintillateurs plastiques est en outre un argument industriel important.

Toutefois, à ce jour aucun détecteur à scintillateur plastique simple ne peut atteindre les objectifs des normes pour le contrôle des véhicules, c'est-à-dire s'affranchir du bruit de fond gamma pour détecter à une distance de 2 mètres une source de Cf252 émettant 20 000 neutrons par seconde dans 4 π.

Le document PETER E. VANIER ET AL.: "Calibration and testing of a large-area fast-neutron directional detector", NUCLEAR SCIENCE SYMPOSIUM CONFERENCE RECORD, 2007, pages 179-184 divulgue un système de détection de radiation comprenant des scintillateurs plastiques et un algorithme pour la discrimination de neutrons, gammas et muons sur la base d'un écart temporel et de l'amplitude des impulsions.

L'inconvénient est que le détecteur à scintillateur plastique est de faible densité et délivre un signal impulsionnel dont la forme est fort similaire pour les gammas, les muons et les neutrons. La difficulté que rencontre les industriels est de réaliser un dispositif de détection qui soit à la fois sensible aux neutrons, et qui permette de s'affranchir des gammas et muons naturellement présent dans l'environnement. De plus, les normes imposent que malgré la présence d'une source gamma de forte intensité générant de plus d'un million de coups par seconde, le détecteur reste sensible aux neutrons issus de sources de faible intensité (par exemple générant environ 10 coups par seconde sur le dispositif de détection).

### EXPOSÉ DE L'INVENTION

L'invention a pour objectif de résoudre cette difficulté, et propose pour ce faire un système de détection de radiation comprenant :
- des scintillateurs plastiques juxtaposés de telle manière à former au moins une paire de scintillateurs plastiques contigus ;
- un photomultiplicateur associé à chaque scintillateur plastique pour fournir un signal électrique représentatif du signal lumineux généré dans le scintillateur plastique ;
- un calculateur configuré pour :
   ∘ détecter, dans une fenêtre temporelle, des coïncidences d'impulsions entre les signaux électriques fournis par les photomultiplicateurs associés à une paire de scintillateurs plastiques contigus ;
   ∘ pour chaque coïncidence d'impulsions, déterminer l'écart temporel entre les impulsions en coïncidence relativement à l'impulsion de plus grande amplitude prise comme référence zéro ;
   ∘ déterminer le nombre de coïncidences d'impulsions dont l'écart temporel est compris dans une fenêtre d'écart temporel.

Certains aspects préférés mais non limitatifs de ce système sont les suivants :
- le calculateur est configuré pour sélectionner les coïncidences d'impulsions dans trois fenêtres d'écart temporel, de sorte à discriminer les neutrons, les gammas et les muons ;
- le calculateur est en outre configuré pour déterminer le nombre d'impulsions générées dans un scintillateur plastique en fonction de leur amplitude, et pour comptabiliser le nombre d'impulsions dont l'amplitude est comprise entre un seuil bas et un seuil haut ;
- il comprend au moins trois scintillateurs plastiques formant au moins deux paires de scintillateurs plastiques contigus ;
- une feuille de cadmium ou de gadolinium est interposée entre les scintillateurs plastiques de l'au moins une paire de scintillateurs plastiques contigus ;
- les scintillateurs plastiques présentent une forme parallélépipédique ;
- les scintillateurs plastiques présentent une section transversale de dimensions décimétriques ;
- les scintillateurs plastiques sont des scintillateurs de longueur multi-décimétrique ;
- la fenêtre temporelle de détection des coïncidences d'impulsions est inférieure à +/- 50 ns.

Selon un second aspect, l'invention porte sur un procédé de détection de radiation, comprenant les étapes suivantes mises en oeuvre par un calculateur relié à des photomultiplicateurs associés à des scintillateurs plastiques juxtaposés de telle manière à former au moins une paire de scintillateurs plastiques contigus :
- détection, dans une fenêtre temporelle, de coïncidences d'impulsions entre les signaux électriques fournis par les photomultiplicateurs associés à une paire de scintillateurs plastiques contigus ;
- pour chaque coïncidence d'impulsions, détermination de l'écart temporel entre les impulsions en coïncidence relativement à l'impulsion de plus grande amplitude prise comme référence zéro ;
- détermination du nombre de coïncidences d'impulsions dont l'écart temporel est compris dans une fenêtre d'écart temporel.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- les figures 1a et 1b illustrent l'agencement de scintillateurs plastiques utilisés dans un système de détection selon l'invention ;
- la figure 2 illustre un mode de réalisation d'un système de détection selon l'invention ;
- la figure 3 représente le nombre de coïncidences d'impulsions en fonction de leur écart temporel relativement à l'impulsion de plus grande amplitude prise comme référence zéro ;
- la figure 4 représente un filtrage d'impulsions en fonction de leur amplitude pouvant être mis en oeuvre dans un mode de réalisation possible de l'invention

### EXPOSÉ DÉTAILLÉ DE MODES DE RÉALISATION PARTICULIERS

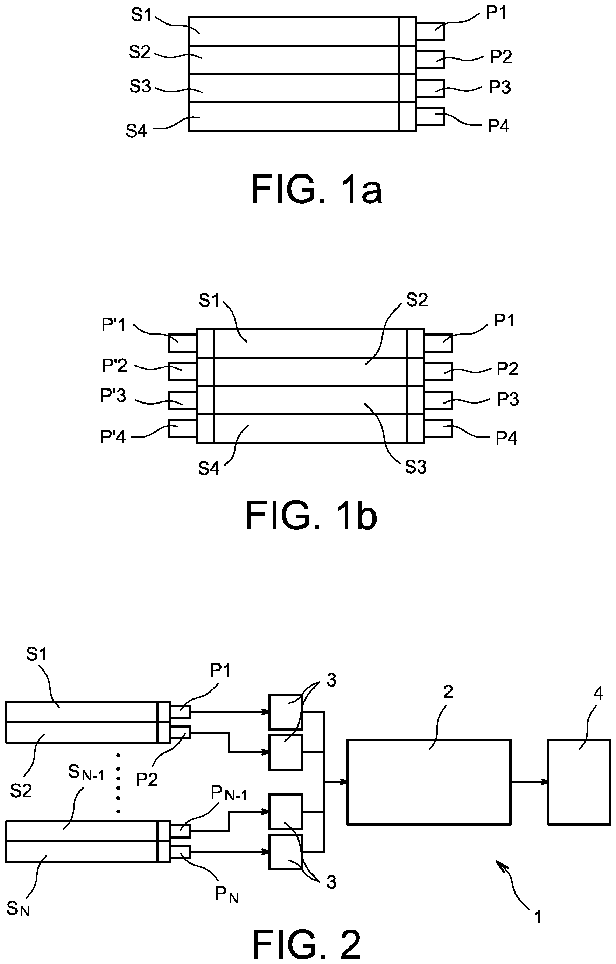

En référence aux figures 1a, 1b et 2, l'invention porte sur un système de détection de radiation 1 comprenant des scintillateurs plastiques S1-S4, S1-S_{N} juxtaposés de telle manière à former au moins une paire de scintillateurs plastiques contigus.

Les scintillateurs plastiques, dont le nombre peut varier de deux à quelques dizaines, sont ainsi placés au contact les uns des autres. Le nombre de scintillateurs plastiques est préférentiellement au moins de trois, de manière à former au moins deux paires de scintillateurs plastiques contigus. Sur les figures la et 1b, quatre scintillateurs sont utilisés permettant de former trois paires de scintillateurs plastiques contigus S1-S2, S2-S3 et S3-S4. On relèvera que les scintillateurs sont identiques ; il s'agit par exemple de scintillateurs EJ-200 de la société Eljen Technology.

Les scintillateurs prennent de préférence une forme parallélépipédique, et présentent de préférence une section transversale de dimensions décimétriques et une longueur multi-décimétrique, par exemple 10^{∗}10^{∗}100 cm.

La géométrie parallélépipédique offre une surface de détection importante et une interface plane entre scintillateurs. La longueur conséquente permet de collecter des interactions distantes d'en moyenne 50 cm ce qui permet la séparation puis la sélection temporelle des impulsions. Les dimensions décimétriques permettent de discriminer les particules d'interaction rapide (par exemple les muons et les gammas de forte énergie) des particules lentes (comme les neutrons).

Dans un mode de réalisation possible, une feuille de cadmium ou de gadolinium est interposée entre les faces en contact des scintillateurs plastiques d'au moins une paire de scintillateurs plastiques contigus. Cette feuille, d'épaisseur par exemple comprise entre 0,1 à 5 mm, peut être placée sur toutes les faces d'un scintillateur. Le recours à une telle feuille s'avère avantageux en ce que l'interaction des neutrons avec le cadmium, le gadolinium ou toute autre matériau de section efficace d'interaction avec les neutrons équivalente favorise la création de gammas prompt collectés par le plastique. La sensibilité du système se trouve donc améliorée de par la présence d'une telle feuille, avec un gain de 10 sur l'efficacité intrinsèque native du plastique scintillant à détecter les neutrons.

Un photomultiplicateur P1-P4, P'1-P'4, P1-P_{N} au moins est associé à chaque scintillateur plastique pour fournir un signal électrique représentatif du signal lumineux généré dans le scintillateur plastique. Un photomultiplicateur est agencé à une extrémité du scintillateur plastique et permet de localiser une interaction le long du scintillateur.

Comme illustré sur la figure la, un photomultiplicateur P1-P4 peut être associé à chaque scintillateur S1-S4. On peut également recourir à deux photomultiplicateurs P1-P4, P'1-P'4 par scintillateur S1-S4, chacun placé à l'une des extrémités du scintillateur comme illustré sur la figure 1b. L'usage de deux photomultiplicateurs par scintillateur présente l'avantage de permettre de mieux distinguer les muons, qui traversent et interagissent tout le long des détecteurs, des neutrons, qui présentent des interactions localisées dans une zone (décimétrique) du détecteur.

En référence à la figure 2, le système de détection 1 comporte également un calculateur 2 relié aux photomultiplicateurs P1-P_{N} par l'intermédiaire de convertisseurs analogique-numérique 3. Le système 1 peut également comporter un module d'interface homme-machine 4, par exemple un écran sur lequel sont restitués les résultats des mesures.

Le calculateur est configuré pour mettre en oeuvre un algorithme décrit ci-après qui permet de sélectionner les impulsions générées dans les détecteurs en fonction des propriétés physiques des particules neutron, gamma et muon, notamment les différences de vitesse et d'énergie. La vitesse se traduit par une date d'écart de temps relatif entre deux impulsions et une durée des impulsions, tandis que l'énergie se traduit par l'amplitude de l'impulsion.

Le calculateur vient comparer les signaux issus d'une paire de scintillateurs contigus, cette comparaison étant avantageusement réalisée pour chaque paire lorsque l'on en compte plusieurs, pour détecter des impulsions issues d'un même type de rayonnement nucléaire (gamma haute et basse énergie, neutron et muon).

Les neutrons interagissent dans un scintillateur plastique en deux temps. Les neutrons rapides génèrent des collisions avec les noyaux d'hydrogène dans les détecteurs plastiques. Ces collisions élastiques mettent en mouvement à chaque collision un proton de recul. Les protons de recul ionisent les couches électroniques des atomes du plastique ce qui conduit, par transfert énergétique, à l'émission de la lumière. L'énergie moyenne libérée par les protons de recul est d'environ 0,1 à 0,4 MeV.

Puis, les neutrons interagissent avec le Cadmium pour créer un flash gamma prompt d'énergie très élevée d'environ 8 MeV, qui à son tour va interagir avec le plastique.

La première et la seconde interactions du neutron avec le système de détection sont séparées dans le temps en moyenne de 20 ns (de 4 à 40 ns). De plus le niveau d'énergie de ces deux interactions est très différent. Les neutrons se déplacent à une vitesse proportionnelle à leur énergie soit environ 1,5 cm/ns pour une énergie de 2 MeV. Le flash gamma se déplace à la vitesse de la lumière soit 30 cm/ns.

Ainsi pour les neutrons, on observe sur les scintillateurs contigus un premier pic de faible amplitude provenant du proton de recul suivi d'un second pic de forte amplitude provenant du flash gamma.

Les gamma de 60 KeV à 2 MeV interagissent avec les scintillateurs plastiques avec une grande efficacité. Les gamma se déplacent à la vitesse de 30 cm/ns et sont détectés presque simultanément dans les différents scintillateurs. Et on détecte sur les scintillateurs contigus un premier pic de forte amplitude suivi quasi-instantanément d'un second pic Compton de moindre amplitude. S'agissant des muons, on détecte sur les scintillateurs contigus deux pics de même amplitude quasi-simultanés.

Le calculateur du système de détection utilise ces propriétés de la manière suivante pour discriminer neutrons, gammas et muons.

Le calculateur est tout d'abord configuré pour détecter, dans une fenêtre temporelle, des coïncidences d'impulsions entre les signaux électriques fournis par les photomultiplicateurs associés à une paire de scintillateurs plastiques contigus. La fenêtre temporelle est de préférence inférieure à +/- 50 ns, par exemple de +/- 40 ns. La faible durée de cette fenêtre permet, après que deux impulsions en coïncidence aient été détectées, de rendre disponible le calculateur pour détecter les coïncidences suivantes. Par comparaison, des systèmes travaillant par détection de neutrons retardés doivent mobiliser les électroniques quelques 100 000 000 ns, au lieu de 40 ns pour le système selon l'invention.

Le calculateur est en outre configuré pour déterminer, pour chaque coïncidence d'impulsions, l'écart temporel entre les impulsions en coïncidence relativement à l'impulsion de plus grande amplitude prise comme référence zéro.

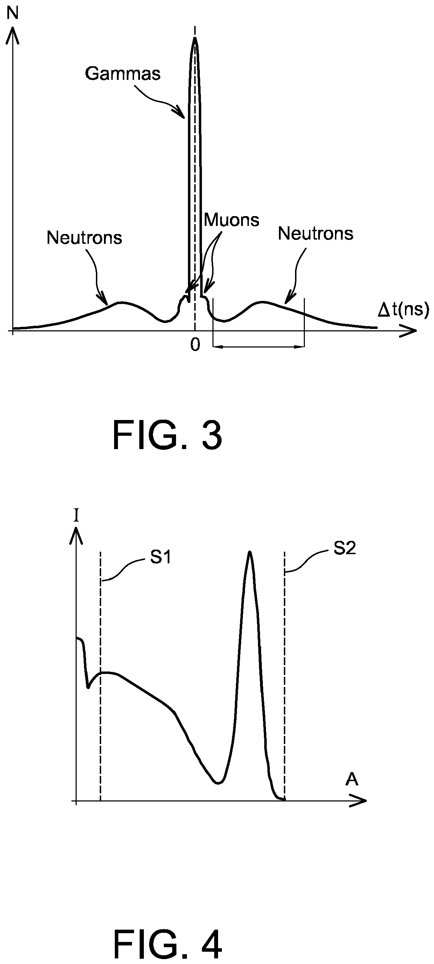

On a représenté sur la figure 3, le nombre N de coïncidences d'impulsions en fonction de leur écart temporel Δt tel que déterminé par le calculateur. On discrimine ainsi des impulsions qui interagissent de façon presque simultanées, de celles qui interagissent avec un délai de quelques dizaine de nanosecondes.

Les coïncidences gammas sont ainsi centrées autour de la référence temporelle 0. Les gammas sont en effet les particules les plus rapides à interagir dans deux détecteurs plastiques mitoyens. Ils forment un pic central sur le spectre temporel (de -3 à + 3 ns globalement).

La mesure de l'écart temporel des impulsions générées par les muons dont l'énergie est très élevée (20 GeV) est légèrement surestimée en raison de la saturation de l'électronique. En conséquence les muons sur le spectre temporel sont distribués de part et d'autre au pied du pic gamma où ils forment des premières bosses (de -10 à -3 ns et de 3 à 10 ns globalement). Les neutrons, 5 à 10 fois plus lents que les gammas, accusent toujours un retard et forment des deuxièmes bosses sur le spectre temporel (de -40 à -10 ns et de 10 à 40 ns globalement) de part et d'autre au pied du pic gamma.

Le calculateur est par ailleurs configuré pour déterminer le nombre de coïncidences d'impulsions dont l'écart temporel est compris dans une fenêtre d'écart temporel. On peut ainsi sélectionner les coïncidences d'impulsions impliquant un type particulier de rayonnement nucléaire. Une fenêtre d'écart temporel comprenant les écarts inférieurs à 3 ns en valeur absolue permet de décompter les gammas, tandis qu'une fenêtre d'écart temporel comprenant les écarts compris entre 3 et 10 ns en valeur absolue permet de décompter les muons, et qu'une fenêtre d'écart temporel comprenant les écarts compris entre 10 et 40 ns en valeur absolue permet de décompter les neutrons.

Considérant une source gamma additive à 1 M c/s (coups par seconde), et trois scintillateurs, on retrouve donc environ 300 000 c/s par scintillateur, soit 1200 coups sur une fenêtre temporelle de 40 ns. Les muons participent également au bruit de fond de 4 à 12 c/s selon la position des scintillateurs par rapport au zénith. Le système de détection selon l'invention permet de réduire ce bruit de fond en détection neutron (il est alors proche de zéro grâce à l'isolation des muons), de sorte que la détection de très faible quantité de neutrons (inférieure à 10 c/s) est rendue possible, de même que la détection de neutrons en présence d'une source gamma additive intense.

Dans un mode de réalisation possible, le calculateur peut être en outre configuré pour déterminer le nombre d'impulsions générées dans un scintillateur plastique en fonction de leur amplitude. Les impulsions sont alors discriminées par un seuil bas S1 et un seuil haut S2, seules les impulsions comprises entre ces seuils étant comptabilisées. On peut ainsi éliminer les impulsions ayant pour origine les comptons de rayonnement gammas dont l'amplitude est toujours beaucoup plus faible (globalement 10 fois plus faible) que celles des gammas prompts.

On a représenté sur la figure 4 un tel filtrage d'impulsions en fonction de leur amplitude, dans un spectre d'énergie représentant le nombre d'impulsions générées I en fonction de leur amplitude A. Il découle de ce filtrage une amélioration de la résolution en énergie (le spectre à basse énergie affiche des valeurs de comptage proches de zéro au lieu de valeurs très élevées) qui rend possible l'identification d'un radio-isotope émetteur gamma de faible énergie comme l'Américium 241 à 59 keV.

L'invention n'est pas limitée au système de détection tel que décrit précédemment, mais s'étend également au procédé mis en oeuvre par le calculateur, en particulier la réalisation des étapes suivantes :
- détection, dans une fenêtre temporelle, de coïncidences d'impulsions entre les des signaux électroniques fournis par les photomultiplicateurs associés à une paire de scintillateurs plastiques contigus ;
- pour chaque coïncidence d'impulsions, détermination de l'écart temporel entre les impulsions en coïncidence relativement à l'impulsion de plus grande amplitude prise comme référence zéro ;
- détermination du nombre de coïncidences d'impulsions dont l'écart temporel est compris dans une fenêtre d'écart temporel.

Et l'invention s'étend également à un produit programme d'ordinateur comportant des instructions de code pour l'exécution desdites étapes lorsque le programme est exécuté sur un ordinateur.

## Revendications

1. Système de détection de radiation (1) comprenant :
- des scintillateurs plastiques (S1-S4, S1-S_{N}) juxtaposés de telle manière à former au moins une paire de scintillateurs plastiques contigus ;
- un photomultiplicateur (P1-P4, P'1-P'4, P1-P_{N}) associé à chaque scintillateur plastique pour fournir un signal électrique représentatif du signal lumineux généré dans le scintillateur plastique ;
- un calculateur (2) configuré pour :
∘ détecter, dans une fenêtre temporelle, des coïncidences d'impulsions entre les signaux électriques fournis par les photomultiplicateurs associés à une paire de scintillateurs plastiques contigus ;
∘ pour chaque coïncidence d'impulsions, déterminer l'écart temporel entre les impulsions en coïncidence relativement à l'impulsion de plus grande amplitude prise comme référence zéro ;
∘ déterminer le nombre de coïncidences d'impulsions dont l'écart temporel est compris dans une fenêtre d'écart temporel.

2. Système selon la revendication 1, dans lequel le calculateur est configuré pour sélectionner les coïncidences d'impulsions dans trois fenêtres d'écart temporel, de sorte à discriminer les neutrons, les gammas et les muons.

3. Système selon l'une des revendications 1 et 2, dans lequel le calculateur est en outre configuré pour déterminer le nombre d'impulsions générées dans un scintillateur plastique en fonction de leur amplitude, et pour comptabiliser le nombre d'impulsions dont l'amplitude est comprise entre un seuil bas et un seuil haut.

4. Système selon l'une des revendications 1 à 3, comprenant au moins trois scintillateurs plastiques formant au moins deux paires de scintillateurs plastiques contigus.

5. Système selon l'une des revendications 1 à 4, dans lequel une feuille de cadmium ou de gadolinium est interposée entre les scintillateurs plastiques de l'au moins une paire de scintillateurs plastiques contigus.

6. Système selon l'une des revendications 1 à 5, dans lequel les scintillateurs plastiques présentent une forme parallélépipédique.

7. Système selon l'une des revendications 1 à 6, dans lequel les scintillateurs plastiques présentent une section transversale de dimensions décimétriques.

8. Système selon l'une des revendications 1 à 7, dans lequel les scintillateurs plastiques sont des scintillateurs de longueur multi-décimétrique.

9. Système selon l'une des revendications 1 à 8, dans lequel la fenêtre temporelle de détection des coïncidences d'impulsions est inférieure à +/- 50 ns.

10. Procédé de détection de radiation, comprenant les étapes suivantes mises en oeuvre par un calculateur relié à des photomultiplicateurs associés à des scintillateurs plastiques juxtaposés de telle manière à former au moins une paire de scintillateurs plastiques contigus :
- détection, dans une fenêtre temporelle, de coïncidences d'impulsions entre les signaux électriques fournis par les photomultiplicateurs associés à une paire de scintillateurs plastiques contigus ;
- pour chaque coïncidence d'impulsions, détermination de l'écart temporel entre les impulsions en coïncidence relativement à l'impulsion de plus grande amplitude prise comme référence zéro ;
- détermination du nombre de coïncidences d'impulsions dont l'écart temporel est compris dans une fenêtre d'écart temporel.

## Patentansprüche

1. System zur Detektion von Strahlung (1), umfassend:
- Kunststoff-Szintillatoren (S1-S4, S1-S_{N}), welche in einer derartigen Weise aneinandergereiht sind, dass wenigstens ein Paar von aneinandergrenzenden Kunststoff-Szintillatoren gebildet ist;
- einen Fotomultiplier (P1-P4, P'1-P'4, P1-P_{N}), welcher jedem Kunststoff-Szintillator zugeordnet ist, um ein elektrisches Signal zu liefern, welches das in dem Kunststoff-Szintillator erzeugte Lichtsignal repräsentiert;
- einen Rechner (2), welcher dazu eingerichtet ist:
∘ in einem Zeitfenster Puls-Koinzidenzen zwischen den elektrischen Signalen zu detektieren, welche von den Fotomultipliern geliefert werden, welche einem Paar von aneinandergrenzenden Kunststoff-Szintillatoren zugeordnet sind;
∘ für jede Puls-Koinzidenz den zeitlichen Abstand zwischen den Pulsen in Koinzidenz relativ zu dem Puls mit der größten Amplitude zu bestimmen, welcher als Null-Referenz genommen wird;
∘ die Anzahl der Puls-Koinzidenzen zu bestimmen, deren zeitlicher Abstand in einem Fenster eines zeitlichen Abstands enthalten ist.

2. System nach Anspruch 1, wobei der Rechner dazu eingerichtet ist, die Puls-Koinzidenzen in drei Fenstern eines zeitlichen Abstands auszuwählen, um Neutronen, Gammas und Myonen zu unterscheiden.

3. System nach einem der Ansprüche 1 und 2, wobei der Rechner ferner dazu eingerichtet ist, die Anzahl von Pulsen, welche in einem Kunststoff-Szintillator erzeugt werden, als Funktion ihrer Amplitude zu bestimmen, und die Anzahl von Pulsen zu erfassen, deren Amplitude zwischen einer unteren Schwelle und einer oberen Schwelle enthalten ist.

4. System nach einem der Ansprüche 1 bis 3, umfassend wenigstens drei Kunststoff-Szintillatoren, welche wenigstens zwei Paare von aneinandergrenzenden Kunststoff-Szintillatoren bilden.

5. System nach einem der Ansprüche 1 bis 4, wobei eine Lage aus Cadmium oder Gadolinium zwischen die Kunststoff-Szintillatoren des wenigstens einen Paars von aneinandergrenzenden Kunststoff-Szintillatoren eingefügt ist.

6. System nach einem der Ansprüche 1 bis 5, wobei die Kunststoff-Szintillatoren eine parallelepipedische Form aufweisen.

7. System nach einem der Ansprüche 1 bis 6, wobei die Kunststoff-Szintillatoren einen transversalen Querschnitt mit Abmessungen im Dezimeterbereich aufweisen.

8. System nach einem der Ansprüche 1 bis 7, wobei die Kunststoff-Szintillatoren Szintillatoren mit einer Länge im Multi-Dezimeterbereich sind.

9. System nach einem der Ansprüche 1 bis 8, wobei das zeitliche Fenster der Detektion von Puls-Koinzidenzen kleiner als +/- 50 ns ist.

10. Verfahren zum Detektieren von Strahlung, umfassend die folgenden Schritte, welche durch einen Rechner durchgeführt werden, welcher mit Fotomultipliern gekoppelt ist, welche Kunststoff-Szintillatoren zugeordnet sind, welche in einer derartigen Weise aneinandergereiht sind, dass wenigstens ein Paar von aneinandergrenzenden Kunststoff-Szintillatoren gebildet ist:
- in einem Zeitfenster Detektieren von Puls-Koinzidenzen zwischen den elektrischen Signalen, welche von den Fotomultipliern geliefert werden, welche einem Paar von aneinandergrenzenden Kunststoff-Szintillatoren zugeordnet sind;
- für jede Puls-Koinzidenz Bestimmen des zeitlichen Abstands zwischen den Pulsen in Koinzidenz relativ zu dem Puls mit der größten Amplitude, welcher als Null-Referenz genommen wird;
- Bestimmen der Anzahl der Puls-Koinzidenzen, deren zeitlicher Abstand in einem Fenster eines zeitlichen Abstands enthalten ist.

## Claims

1. A radiation detecting system (1) comprising:
- plastics scintillators (S1-S4, S1-S_{N}) juxtaposed so as to form at least one pair of contiguous plastics scintillators;
- a photomultiplier (P1-P4, P'1-P'4, P1-P_{N}) associated with each plastics scintillator to provide an electrical signal representative of the light signal generated in the plastics scintillator;
- a calculator (2) configured to:
∘ detect, in a time window, pulse coincidences between the electrical signals provided by the photomultipliers associated with a pair of contiguous plastics scintillators;
∘ for each pulse coincidence, determine the time offset between the coincidence pulses relative to the pulse having the greatest amplitude taken as a zero reference;
∘ determine the number of pulse coincidences the time offset of which is included in a time offset window.

2. The system according to claim 1, wherein the calculator is configured to select the pulse coincidences in three time offset windows, so as to discriminate neutrons, gammas and muons.

3. The system according to one of claims 1 and 2, wherein the calculator is further configured to determine the number of pulses generated in a plastics scintillator as a function of their amplitude, and to count the number of pulses the amplitude of which is between a low threshold and a high threshold.

4. The system according to one of claims 1 to 3, comprising at least three plastics scintillators forming at least two pairs of contiguous plastics scintillators.

5. The system according to one of claims 1 to 4, wherein a cadmium or gadolinium sheet is interposed between the plastics scintillators of the at least one pair of contiguous plastics scintillators.

6. The system according to one of claims 1 to 5, wherein the plastics scintillators have a parallelepiped shape.

7. The system according to one of claims 1 to 6, wherein the plastics scintillators have a transverse cross-section with decimetric dimensions.

8. The system according to one of claims 1 to 7, wherein the plastics scintillators are scintillators with a multi-decimetric length.

9. The system according to one of claims 1 to 8, wherein the time window for detecting the pulse coincidences is lower than +/- 50 ns.

10. A radiation detecting method, comprising the following steps implemented by a calculator connected to photomultipliers associated with plastics scintillators which are juxtaposed so as to form at least one pair of contiguous plastics scintillators:
- detecting, in a time window, pulse coincidences between the electrical signals provided by the photomultipliers associated with a pair of contiguous plastics scintillators;
- for each pulse coincidence, determining the time offset between the coincidence pulses relative to the pulse having the greatest amplitude taken as a zero reference;
- determining the number of pulse coincidences the time offset of which is included in a time offset window.
